(19)

Europäisches Patentamt
European Patent Office
Office européen des brevets

(11) **EP 2 731 279 A1**

(12) **EUROPEAN PATENT APPLICATION**

(43) Date of publication:
**14.05.2014 Bulletin 2014/20**

(51) Int Cl.:
**H04B 10/2569** (2013.01)

(21) Application number: **13188259.9**

(22) Date of filing: **11.10.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **08.11.2012 JP 2012246306**

(71) Applicant: **FUJITSU LIMITED**
**Kawasaki-shi,**
**Kanagawa 211-8588 (JP)**

(72) Inventor: **Ota, Kenji**
**Kanagawa, 211-8588 (JP)**

(74) Representative: **HOFFMANN EITLE**
**Patent- und Rechtsanwälte**
**Arabellastrasse 4**
**81925 München (DE)**

(54) **Optical transmission system, optical transmitter, optical receiver, and optical transmission method**

(57)    An optical transmission system includes an optical transmitter, an optical receiver, and an optical transmission path connecting the optical transmitter and the optical receiver, wherein the optical transmitter has a first polarization scrambler to change a polarization state of an optical transmission signal in a first direction at a first polarization scrambling frequency synchronized with a transmission signal frequency, and the optical receiver has a second polarization scrambler to change a polarization state of an optical signal received from the optical transmission path at a second scrambling frequency synchronized with a received signal frequency in a second direction opposite to the first direction.

FIG.1

## Description

### TECHNICAL FIELD

The present invention relates to an optical transmission system, an optical transmitter, an optical receiver, and an optical transmission method to transmit optical signals using polarization scrambling.

### BACKGROUND ART

In recent years and continuing, demand for long-distance and high-capacity optical transmission systems has been increasing. One approach to realize high-capacity optical transmission is adopting wavelength-division multiplexing (WDM). With a WDM scheme, multiple signals are combined on light beams at various wavelengths for transmission along a fiber optic cable.

To convey more information on a light beam at a single wavelength, polarization-division multiplexing is employed. In this method, signals are multiplexed on the light beam making use of the polarization of the beam in distinguished directions. By modulating signals in different directions of polarization, transmission capacity can be increased without increasing the signal transmission rate or the number of wavelengths.

In long-distance, high-capacity optical transmission, optical amplifiers are used to periodically amplify a signal light that has attenuated through an optical fiber. During transmission over a long distance, optical signals suffer influence of polarization mode dispersion (PMD) and polarization dependent loss (PDL). Besides, due to polarization hole-burning in which the gain of a fiber-optic amplifier decreases depending on the polarization state, the signal-to-noise ratio (SNR) falls and fluctuation occurs. When optical signals adjacent to each other are transmitted at the same polarization over a long distance, one optical signal is affected by the modulation of the other signal and the transmission quality is degraded.

In order to remove influence of polarization mode dispersion or polarization hole-burning from transmission characteristics, polarization scrambling is adopted in a long-distance transmission to randomly change the direction of polarization. Under polarization scrambling, polarized signals assume an unpolarized state, which can prevent degradation of the waveforms.

When performing polarization scrambling in a polarization-division multiplexing scheme such as dual-polarization quadrature phase shift keying (DP-QPSK), signals are subjected to influence of polarization dependence of the optical amplifier even if polarization scrambling is applied at a low rate of 10 kHz. This is because the polarization scrambling speed is slower than the response speed of the optical amplifier. In this case, polarization scrambling may cause degradation of the transmission characteristics. The transmission characteristics may not be improved unless higher-rate polarization scrambling (such as several hundred kHz scrambling) is applied.

In polarization-division multiplexing, two orthogonal polarization components are separated from each other by digital signal processing in a receiver. If high-speed polarization scrambling is applied, an x-direction polarized wave and a y-direction polarized wave cannot be separated correctly and penalty will increase. To avoid this, the receiver first cancels out the polarization scrambling effect applied on the transmission side. However, it is difficult for the receiver to identify the directions of polarization to cancel out the polarization scrambling when high-speed and random polarization scrambling is applied.

A technique is proposed to control a difference between the transmission-side polarization scrambling frequency and the receiving-side polarization scrambling frequency within a prescribed range based upon code error information detected at a receiver (see, for example, Patent Document 1). With this technique, polarization scramble can be cancelled at a receiver without providing a control network system connected between the transmission side and the receiving side.

### Citation List

Patent Document 1: Japanese Laid-open Patent Publication No. 2011-234325

### SUMMARY OF INVENTION

Technical Problem

However, the proposed technique has a problem in that polarization scrambling cannot be controlled unless an error correction result is obtained after digital signal processing at a receiver. Besides, even if the polarization scrambling frequency is similar between the transmission side and the receiving side, polarization scramble cannot be correctly cancelled unless the phases align with each other.

Solution to Problem

In view of the above-described problem, the present invention provides an optical transmission technique that improves transmission characteristics by cancelling polarization scrambling in a simple manner on the receiving side when polarization scrambling is applied.

In one aspect of the invention, an optical transmission system includes an optical transmitter, an optical receiver, and an optical transmission path connecting the optical transmitter and the optical receiver, wherein the optical transmitter has a first polarization scrambler to change a polarization state of an optical transmission signal at a first polarization scrambling frequency synchronized with a transmission signal frequency, and the optical receiver has a second polarization scrambler to change a polarization state of an optical signal received from the optical transmission path at a second scrambling frequency synchronized with a received signal frequency in a direction opposite to the first polarization scrambler.

In another aspect of the invention, an optical receiver is provided. The optical receiver includes an optical signal receiving part to receive an optical signal and convert the optical signal to an electric signal, and a polarization scrambler provided before the optical signal receiving part and configured to receive, from an optical transmission path, a signal light whose polarization state is changed in a first direction at a first polarization scrambling frequency synchronized with a transmission signal frequency, and change the polarization state of the signal light in a second direction opposite to the first direction at a second polarization scrambling frequency synchronized with the received signal light.

Advantageous Effect of Invention

Polarization scrambling is cancelled in a simple manner on the receiving side and optical transmission characteristics can be improved.

The object and advantages of the invention will be realized and attained by means of the elements and combinations particularly pointed out in the claims. It is to be understood that both the foregoing general description and the following detailed description are exemplary and explanatory and are not restrictive to the invention as claimed.

BRIEF DESCRIPTION OF DRAWINGS

FIG. 1 is a schematic diagram illustrating an optical transmission system according to an embodiment;
FIG. 2 illustrates an optical transmitter used in the optical transmission system of FIG. 1;
FIG. 3 is a schematic diagram illustrating polarization states on the Poincare spare;
FIG. 4 illustrates a first example of an optical receiver used in the optical transmission system of FIG. 1;
FIG. 5 illustrates a second example of an optical receiver used in the optical transmission system of FIG. 1;
FIG. 6 illustrates a residual component of polarization remaining after cancellation due to phase offset;
FIG. 7 illustrates a third example of an optical receiver used in the optical transmission of FIG. 1;
FIG. 8 illustrates a residual component of polarization remaining after cancellation due to polarization offset; and
FIG. 9 illustrates a fourth example of an optical receiver used in the optical transmission system of FIG. 1.

DESCRIPTION OF EMBODIMENTS

Embodiments of the invention are described with reference to the drawings.

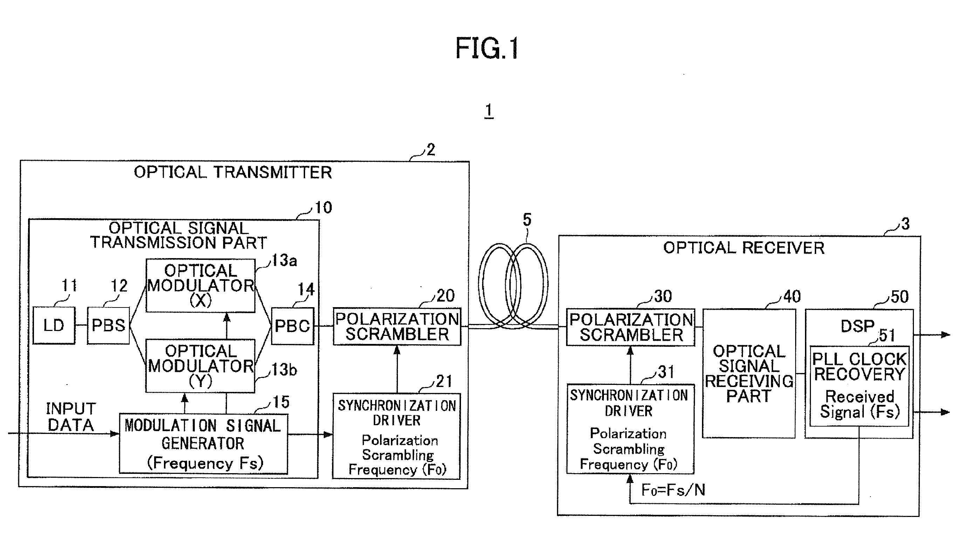

FIG. 1 is a schematic diagram of an optical transmission system according to an embodiment. The optical transmission system 1 includes an optical transmitter 2, an optical receiver 3, and an optical transmission path 5 connecting between the optical transmitter 2 and the optical receiver 3. The optical transmission path 5 is, for example, a fiber-optic cable. In general, optical amplifiers are inserted in the optical transmission path 5; however, they are omitted in the figure for the convenience of illustration.

The optical transmitter 2 has an optical signal transmission part 10, a polarization scrambler 20, and a synchronization driver 21. The optical signal transmission part has a function of an electrical-to-optical converter. In this example, the optical transmitter 2 is a polarization-multiplexing optical transmitter. The optical signal transmission part 10 includes a laser source 11, a polarization separator or a polarization beam splitter (PBS) 12, a pair of optical modulators 13a and 13b, a polarization beam combiner (PBC) 14, and a modulation signal generator 15. A light beam emitted from the laser source 11 is split by the polarization separator 12 into two light components with planes of polarization orthogonal to each other. One of the light components (X-polarized wave) is input to the optical modulator 13a, and the other (Y-polarized wave) is input to the optical modulator 13b. Any suitable modulation scheme including n-level phase shift keying (n-PSK), n-level amplitude and phase shift keying (n-APSK), or n-level quadrature amplitude modulation (n-QAM) may be used. In this example, phase modulation is employed.

The modulation signal generator 15 generates a modulation signal in accordance with the input data. The modulation signal is supplied to each of the optical modulators 13a and 13b to modulate the corresponding polarization components according to the data values. The polarization beam combiner 14 combines the signal lights modulated in the optical modulators 13a and 13b.

The combined signal light is guided to the polarization scrambler 20. The polarization scrambler 20 continuously changes the polarization state of the signal light output from the optical signal transmission part 10 within a plane perpendicular to the direction of propagation of the light, and outputs the signal light to the optical transmission path 5.

The polarization scrambler 20 is driven by a polarization scramble control signal output from the synchronization driver 21. The polarization scramble control signal has a polarization scrambling frequency $F_0$ which is synchronized with frequency $F_s$ of the transmission signal (i.e., the modulation signal). By performing polarization scramble modulation at a constant frequency $F_0$ synchronized with the frequency $F_s$ of the transmission signal, cancellation of the polarization scrambling can be carried out easily and accurately on the receiving side.

The polarization-scrambled optical signal is received via the optical transmission path 5 at the optical receiver 3. In this example, the optical receiver 3 has a polarization scrambler 30, an optical signal receiving part 40, a digital signal processor 50, and a synchronization driver 31. The polarization scrambler 30 modulates the received optical signal in the opposite direction at a polarization scrambling frequency $F_0$, which is synchronized with the received signal, to cancel out the polarization scrambling applied at the sending site. The optical signal output from the polarization scrambler 30 is converted to an electric signal by the optical signal receiving part 40, subjected to analog-to-digital conversion, and then input to the digital signal processor 50.

The digital signal is subjected to clock recovery and timing extraction at the phase-locked loop (PLL) circuit 51 of the digital signal processor 50. The output of the PLL circuit 51 is further subjected to adaptive equalization, phase estimation, data recovery, error correction, and other necessary processes and finally output from the digital signal processor 50.

A portion of the output signal of the PLL circuit 51 is fed back to the synchronization driver 31. The synchronization driver 31 supplies a polarization scrambling control signal of frequency $F_0$, which is synchronized with the frequency $F_s$ of the received signal, to the polarization phase scrambler 30. The polarization scrambler 30 performs polarization scramble modulation in synchronization with the clock recovery timing of the transmitted signal. In other words, the received optical signal is modulated at polarization scrambling frequency $F_0$ which is consistent with and synchronized with the polarization scrambling frequency of the optical transmitter 2, in the opposite direction to cancel the polarization scrambling applied on the transmission side.

With this arrangement, polarization scramble can be appropriately cancelled on the receiving side even if high-speed polarization scrambling at or above 100 kHz is applied. Accordingly, the structure and method of the embodiment can be applied to digital coherent optical receivers. By applying high-speed polarization scrambling to the optical signal being transmitted through the optical transmission path 5, polarization dependency is removed and the transmission characteristics can be improved.

Although in FIG. 1 a single-channel (or single-wavelength) polarization multiplexing optical transmitter 2 is illustrated, a multi-channel optical transmitter may be used by providing two or more optical signal transmission part 10 corresponding to different wavelengths. In this case, a wave combiner is inserted between the polarization scrambler 20 and the optical signal transmission parts 10 to combine the polarization multiplexed signal lights of the respective wavelengths and apply polarization scrambling to the combined signal light.

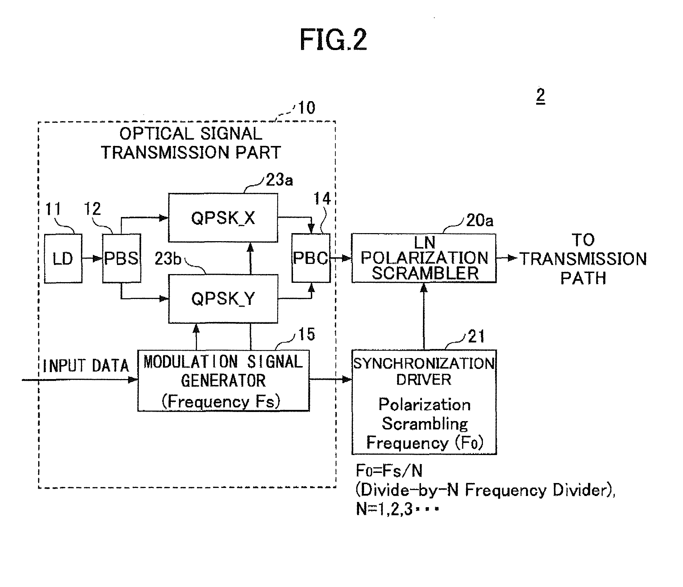

FIG. 2 is an example of the optical transmitter 2 used in the optical transmission system of FIG. 1. The optical signal transmission part 10 of the optical transmitter 2 includes a laser source (LD) 11, a polarization beam splitter 12, a pair of QPSK phase modulators 23a and 23b, a polarization beam combiner 14, and a modulation signal generator 15. The QPSK phase modulators 23a and 23b are, for example, two parallel Mach-Zehnder modulators using LiNbO$_3$ (LN). The QPSK phase modulators 23a and 23b apply phase modulation to the X-polarized wave and the Y-polarized wave, respectively, to provide in-phase (I) component and quadrature-phase (Q) component in the respective waves. When a voltage (or a modulation signal) in response to the input data signal is applied to the electrodes (not illustrated) of the QPSK phase modulators 23a and 23b, the index of refraction of the waveguides formed on the LN substrate vary according to the electric field applied, and a phase difference is produced in the propagating light. Thus, the phase-modulated signal light is output. The frequency $F_s$ of the modulation signal is, for example, 1 GHz or several GHz. The phase-modulated X-polarized wave and Y-polarized wave are combined at the polarization beam combiner 14 and the combined signal is output to the LN polarization scrambler 20a.

The LN polarization scrambler 20a has a configuration in which an electrode (not illustrated) is provided near the optical waveguide formed on the LN substrate. When a polarization scrambling control signal is applied to the electrode at a constant frequency, the index of refraction varies depending on the direction of the crystal axis, and a phase difference is produced between the vertical component and the horizontal component of the linearly polarized incident light. As a result, the polarization state of the output signal light becomes random.

The polarization scrambling frequency $F_0$ is obtained by dividing the modulation signal frequency $F_s$ at a dividing ratio of N (where N is a natural number). The polarization scrambling frequency $F_0$ satisfies the relationship

$$F_0 = F_S/N \quad (N=1, 2, 3, \ldots).$$

If N=1, the polarization scrambling frequency $F_0$ is the same as the modulation signal frequency $F_S$. In this case, the direction of polarization goes around a Poincare sphere at a cycle $1/F_0$.

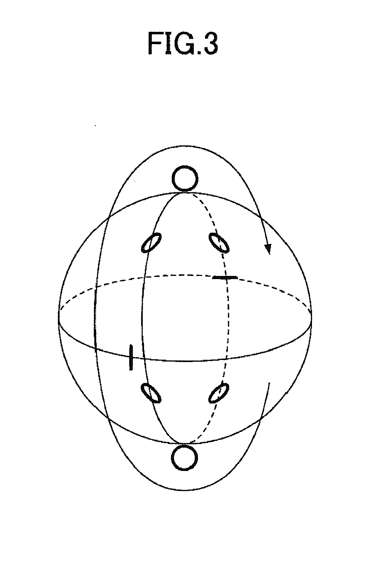

FIG. 3 is a schematic diagram illustrating polarization states expressed on the Poincare sphere. At the north pole and the south pole of the Poincare sphere are circular polarization states (at ellipticity of 1). All linear polarization states lie on the equator (at ellipticity of zero). Elliptically polarized states are represented everywhere, except for the north and south poles and the equator. The northern hemisphere represents right-handed polarizations, and the southern hemisphere represents left-handed polarizations. The orthogonal planes of polarization of X-polarized wave and Y-polarized wave are arranged on the surface of the Poincare sphere symmetrically with respect to the center of the Poincare sphere. Accordingly, the orthogonality between the X-polarized wave and the Y-polarized wave is maintained even if the polarization state is varied at random and at high speed by the polarization scrambler 20.

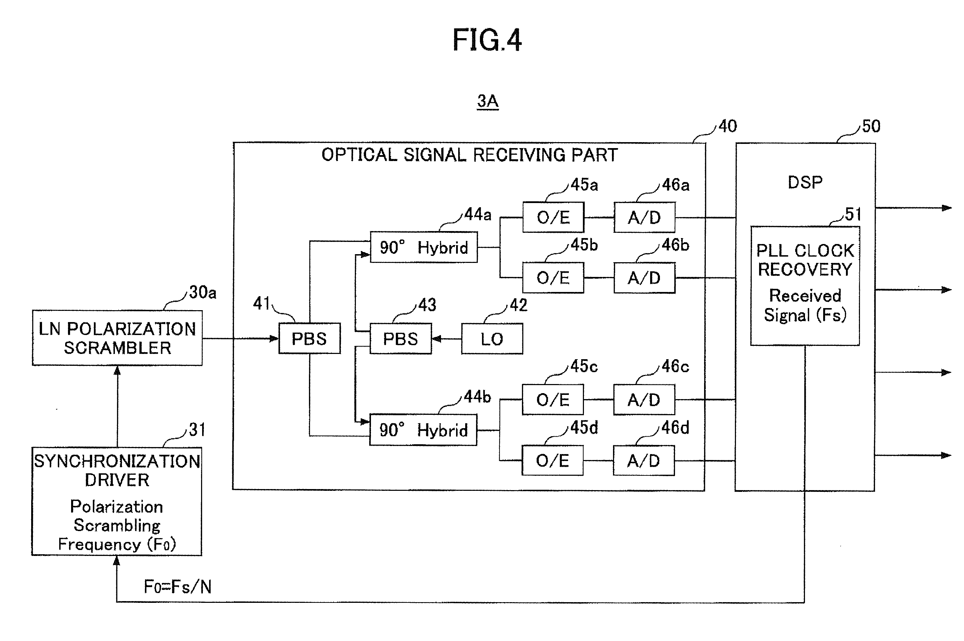

FIG. 4 is a schematic diagram of the optical receiver 3A used in the optical transmission system of FIG. 1. The optical receiver 3A has a LN polarization scrambler 30a, an optical signal receiving part 40, a digital signal processor 50 and a synchronization driver 31. The signal light received at the optical receiver 3A is supplied to the LN polarization scrambler 30a, in which polarization scramble is cancelled. The polarization state of the received signal light is changed within a plane perpendicular to the direction of signal propagation, in the direction opposite to that of the scrambling modulation applied on the transmission side. The polarization descrambled signal light (where polarization scramble has been cancelled) is supplied to the optical signal receiving part 40.

In the optical signal receiving part 40, the signal light is split into two orthogonal polarization components (horizontal polarization and vertical polarization) by the polarization beam splitter (PBS) 41. The split polarization components correspond to the X-polarized wave and the Y-polarized wave separated on the transmission side.

The light beam output from the local oscillator (LO) is split by the polarization beam splitter (PBS) 43 into two orthogonal polarization components, which components are supplied to optical 90-degree hybrid circuits 44a and 44b, respectively. The received light guided to the optical 90-degree hybrid circuits 44a and 44b are detected by the local oscillation light from the local oscillator (LO) 42. The in-phase (I) component and the quadrature (Q) component are separated from each of the horizontal polarization and the vertical polarization. The in-phase and quadrature separated components of the horizontal and vertical polarization components are supplied to the optical-to-electrical converters 45a to 45d, respectively and converted into electric signals. The electric signals are supplied to the analog-to-digital converters 46a to 46d and converted into digital signals, which are then input to the digital signal processor 50.

From the signal input to the digital signal processor 50, a clock component is recovered at the PLL circuit 51. The recovered received signal frequency $F_s$ is supplied to the synchronization driver 31. The synchronization driver 31 generates a polarization scrambling control signal of frequency $F_0$ synchronized with the received signal frequency $F_s$. The polarization scrambling frequency $F_0$ is obtained by dividing the clock-detected received signal frequency $F_s$ at a dividing ratio N (where N is a natural number). The synchronization driver 31 may be incorporated in the PLL circuit 51 as a frequency divider.

The received light guided to the LN polarization scrambler 30a is subjected to scramble modulation in the opposite direction at the polarization scrambling frequency $F_0$ synchronized with the received signal frequency $F_s$. By this process, the polarization scramble applied on the transmission side is cancelled.

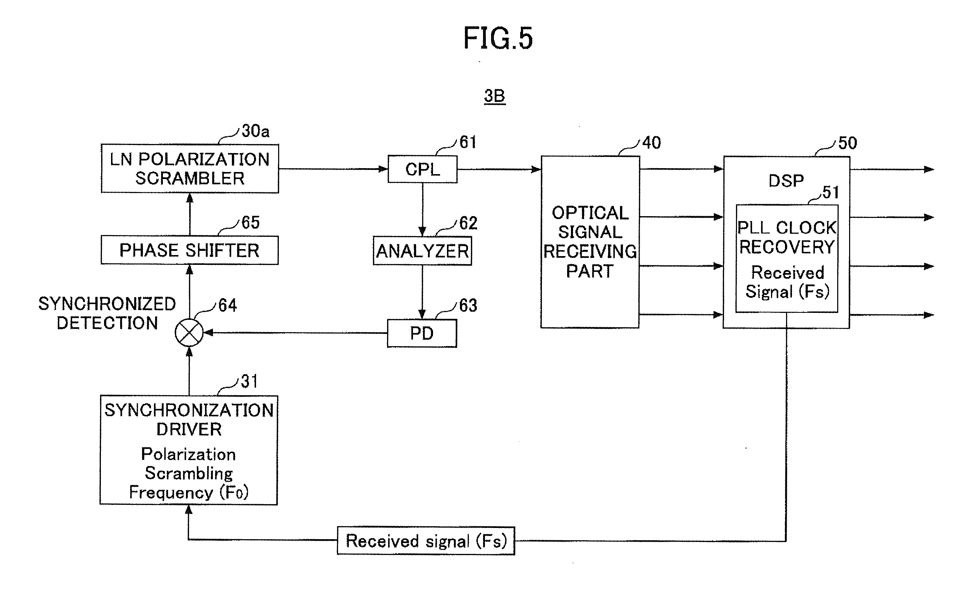

FIG. 5 illustrates an optical receiver 3B, which is the second example of the optical receiver of the embodiment. The optical receiver 3B has an optical directional coupler (CPL) 61, an analyzer 62, a photo-detector (PD) 63, a synchronization analyzer 64, and a phase shifter circuit 65, in addition to the LN polarization scrambler 30a and the synchronization driver 31.

The polarization scramble in the optical signal is cancelled at the LN polarization scrambler 30a. The descrambled light signal is branched at the optical directional coupler (CPL) 61 and a portion of the received light signal is detected at the analyzer 62. The analyzer 62 transmits only a specific polarized wave. The polarized wave transmitted through the analyzer 62 is guided to the photo detector (PD) 63 and converted into an electrical signal component. The detected electrical signal component is input to the synchronization analyzer 64.

The synchronization analyzer 64 also receives a polarization scrambling control signal from the synchronization driver 31. The polarization scrambling control signal has a polarization scrambling frequency $F_0$ which is synchronized with the frequency $F_s$ of the clock-recovered received signal at the PLL circuit 51. The synchronization analyzer 64 detects the polarized component of the electric current supplied from the PD 63 in synchronization with the polarization scrambling frequency $F_0$, and extracts only the $F_0$ component of the output of the PD 63. The $F_0$ component detected from the electric current supplied from the PD 63 is a residual component remaining after the scramble cancellation at the LN polarization scrambler 30a. The phase shifter circuit 65 adjusts the phase of the polarization scrambling control signal to be supplied to the LN polarization scrambler 30a such that the $F_0$ component (the residual of the scramble cancellation) detected from the output of the PD 63 becomes the minimum.

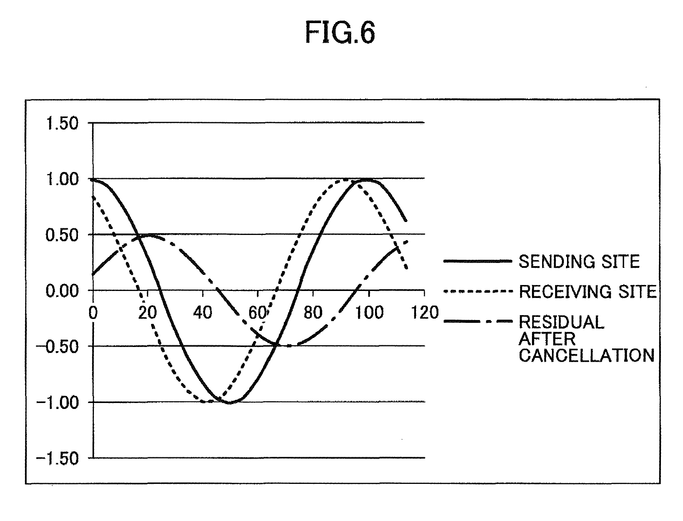

FIG. 6 illustrates a residual of scramble cancellation (or descrambling) that remains even after the cancellation of the polarization scramble due to phase difference. The phase of the light signal having propagated through a long-distance optical transmission path and received at a receiver may shift from the phase of the transmission signal generated at a transmitter. When the phase of the received signal is offset from that of the transmission signal, polarization scramble cannot be completely cancelled and some portion of polarization scramble is left even after polarization scrambling is performed in the opposite direction at polarization scrambling frequency $F_0$ synchronized with the received signal frequency $F_s$. By carrying out phase adjustment so as to minimize the residual of scramble cancellation, the polarization scrambling control signal supplied to the LN polarization scrambler 30a is optimized.

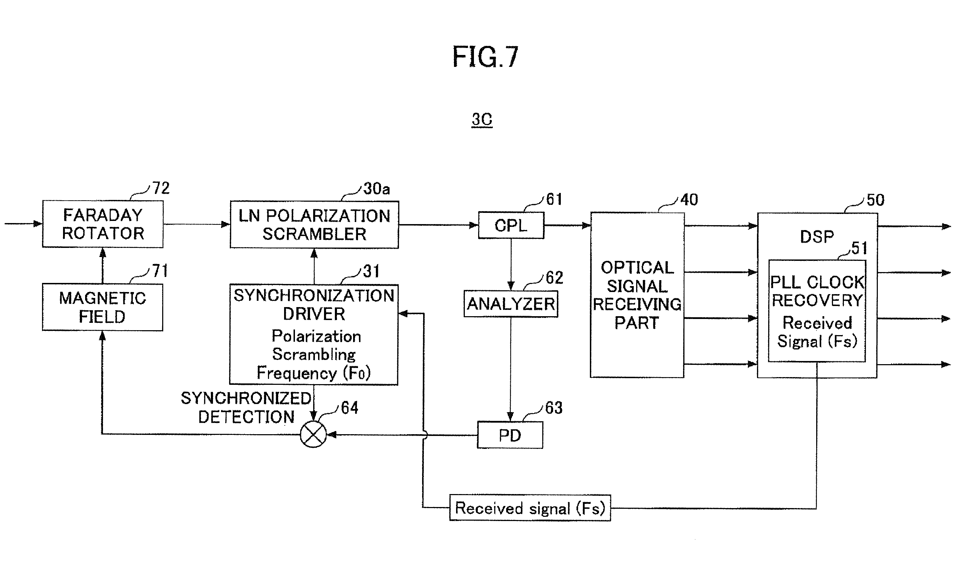

FIG. 7 illustrates an optical receiver 3C, which is the third example of the optical receiver of the embodiment. The optical receiver 3C has an optical directional coupler (CPL) 61, an analyzer 62, a photo-detector (PD) 63, a synchronization analyzer 64, a magnetic field generator 71, and a polarization plane adjustor (such as a Faraday rotator) 72, in addition to the LN polarization scrambler 30a and the synchronization driver 31.

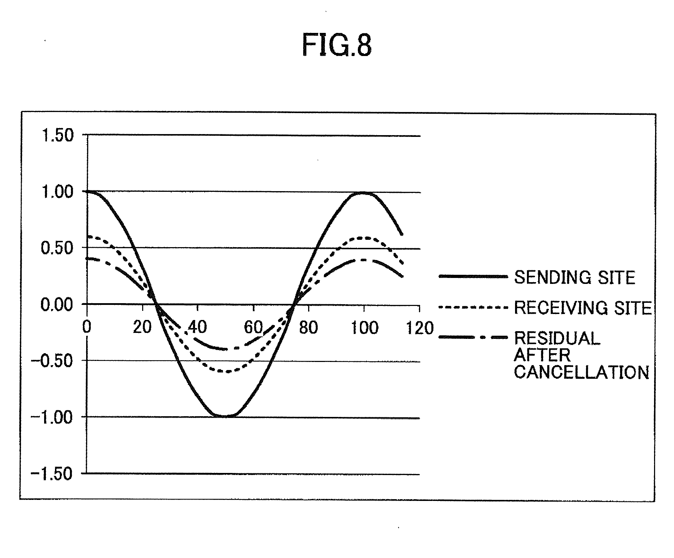

This structure can reduce the residual of scramble cancellation remaining due to a difference or offset of plane of polarization of the received light. The change in polarization scrambling modulation between the transmission side and the receiving side is also caused by difference in the plane of polarization. Even if the modulated scrambling frequencies are synchronized between the transmission side and the receiving side, a residual of scramble cancellation is contained in the output of the LN polarization scrambler 30a unless the directions of the plane of polarization are aligned between the transmission side and the receiving side, as illustrated in FIG. 8. To solve this problem, the optical receiver 3C is configured to reduce a residual of scramble cancellation due to a difference or offset in planes of polarization.

A portion of output light from the LN polarization scrambler 30a is detected by the optical directional coupler (CPL) 71, the analyzer 62, and PD 63. The electrical signal component output from the PD 63 is detected at the synchronization analyzer 64 at the polarization scrambling frequency $F_0$ synchronized with the received signal (of frequency $F_s$). The magnetic field generator 71 generates a magnetic field such that the synchronously detected $F_0$ component becomes the minimum. The Faraday rotator 72 rotates the plane of polarization. The received signal light whose plane of polarization has been adjusted is guided to the LN polarization scrambler 30a. The LN polarization scrambler 30a applies polarization scrambling to the polarization-plane-adjusted received signal in the opposite direction, based upon the polarization scrambling control signal ($F_0$) from the synchronization driver 31. The signal from which the polarization scramble has been removed is input to the optical signal receiving part 40 via the optical directional coupler (CPL) 61.

This arrangement also allows the optical receiver to appropriately cancel polarization scrambling applied on the transmission side. The polarization plane adjustor 72 is not limited to a Faraday rotator. Any suitable device that is able to vary the plane of polarization, such as a combination of a half wavelength plate and a quarter wavelength plate, may be used.

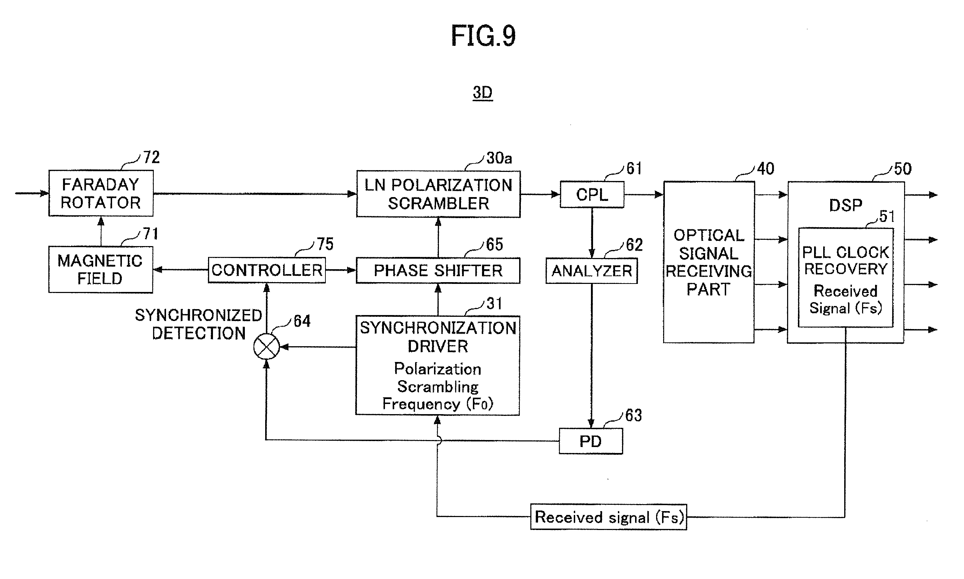

FIG. 9 illustrates an optical receiver 3D, which is the fourth example of the optical receiver of the embodiment. This example is a combination of the second example and the third example. The optical receiver 3D has a CPL 61, an analyzer 62, a PD 63, a synchronization analyzer 64, a phase shifter circuit 65, a magnetic field generator 71, a polarization plane adjustor (e.g., a Faraday rotator) 72, and a control circuit 75, in addition to the LN polarization scrambler 30a and the synchronization driver 31. A portion of the light signal output from the LN polarization scrambler 30a is guided, via the CPL 61, the analyzer 62 and the PD 63, to the synchronization analyzer 64. The polarization-scrambled modulation component detected by the PD 63 (that is, a residual of scramble cancellation) is detected by the synchroniztaion analyzer 64 synchronized with the polarization scrambling frequency $F_0$ which is synchronized with the received signal frequency $F_s$. The detected residual component (remaining even after the cancellation or descrambling) is input to the control circuit 75. The control circuit 75 generates and supplies a phase-adjusting signal to the phase shifter circuit 65 to minimize the residual of scramble cancellation due to phase differences. The phase of the polarization scrambling control signal (of frequency $F_0$) output from the synchronization driver 31 is adjusted by the phase shifter circuit 65 so as to align with the phase of the transmission-side modulation scrambling frequency $F_0$. The phase-adjusted scrambling control signal is input to the LN polarization scrambler 30a in the synchronized state.

The control circuit 75 also generates and supplies a polarization plane adjusting signal to the magnetic field generator 71 to minimize the residual of scramble cancellation due to an offset in planes of polarization. The Faraday rotator 72 changes the plane of polarization under the application of the magnetic field generated by the magnetic field generator 71. Consequently, the received light whose plane of polarization has been adjusted is guided to the LN polarization scrambler 30a.

To remove the residual components of scramble cancellation due to a phase difference and an offset of polarization planes, the phase of the received signal is first adjusted to the optimum state so as to minimize the residual of scrambling cancellation due to phase difference. Alternatively, the phase of the detected signal and the phase of the received signal to be descrambled are first compared and adjusted so as to align with each other. After the minimization of the residual due to phase difference, the plane of polarization is adjusted to further reduce the residual component due to an offset of polarization planes. To repeat the phase adjustment and the polarization-plane adjustment, the received signal is configured to be the optimum state.

The change in the phase and the change in the polarization plane of a transmission signal along the propagation path vary slowly, depending on the temperature of the devices or the temperature of the propagation environment (such as under the sea). The fluctuation in the phase change and the rotation of polarization is sufficiently slow compared to the frequency change in polarization scrambling. Accordingly, the signal phase can be first adjusted and then the polarization state is adjusted so to further reduce the residual component of the scramble cancellation.

With the above-described arrangement, the phase difference and the offset of polarization planes between the transmission side and the receiving side can be reduced. The polarization scrambling applied on the transmission side is appropriately cancelled on the receiving side.

The present invention is not limited to the above-presented examples. Clock extraction may not be necessarily carried out in the digital signal processor 50. Clock extraction may be performed on the electrical analog signal before the analog-to-digital conversion in the optical signal receiving part 40. In this case, polarization scrambling can be cancelled at a polarization scrambling frequency $F_0$ synchronized with the received signal frequency $F_s$, namely, synchronized with the transmission-side polarization scrambling frequency $F_0$.

Synchronization of the polarization scrambling is not limited to use of a digital or analog PLL circuit. For example, a reference frequency acquired from GPS or the like may be used. In this case, polarization scrambling modulation on the transmission side and cancellation of the polarization scrambling on the receiving side may be performed using signals synchronized with the reference frequency.

The polarization scrambler 20 or 30 is not limited to a LN polarization scrambler. A combination of a rotary driver and a half wavelength plate or a quarter wavelength plate may be employed. In this case, the transmission-side rotary driver and the receiving-side rotary driver rotate the associated wavelength plates in the opposite directions at a polarization scrambling frequency $F_0$ ($F_0 = F_S/N$, where N=1, 2, 3, ...) synchronized with the transmission signal frequency $F_S$ and the received signal frequency $F_S$, respectively.

The optical modulation scheme is not limited to QPSK, and other multi-level modulation schemes such as 16 QAM or 64 QAM may be employed by increasing the number of MZ modulators or the number of intensity levels of the photoelectric field.

The present invention is applicable to a digital coherent optical transmission technique; however, the disclosure is not limited to a digital coherent optical receiver. Also, the present disclosure is not limited to a single-channel (or single-wavelength) optical transmission system, but is applicable to a multi-channel optical transmission system.

## Claims

1. An optical transmission system comprising:

   an optical transmitter;
   an optical receiver; and
   an optical transmission path connecting the optical transmitter and the optical receiver, wherein the optical transmitter has a first polarization scrambler to change a polarization state of an optical transmission signal in a first direction at a first polarization scrambling frequency synchronized with a transmission signal frequency, and the optical receiver has a second polarization scrambler to change a polarization state of an optical signal received from the optical transmission path at a second scrambling frequency synchronized with a received signal frequency in a second direction opposite to the first direction.

2. The optical transmission system according to claim 1, wherein the optical receiver has a phase shifter configured to reduce a residual component of cancellation of polarization scramble remaining due to a phase difference between the first polarization scrambling frequency and the second polarization scrambling frequency.

3. The optical transmission system according to claim 1, wherein the optical receiver has a polarization-plane adjustor configured to reduce a residual component of cancellation of polarization scramble remaining due to a polarization offset between polarization planes of the first polarization scrambling frequency and the second polarization scrambling frequency.

4. An optical transmitter comprising:

   an optical signal transmission part to generate a modulated optical signal modulated by a modulation signal in accordance with input data; and
   a polarization scrambler to change a polarization state of the modulated optical signal at a polarization scrambling frequency synchronized with a frequency of the modulated optical signal.

5. An optical receiver comprising:

   an optical signal receiving part to receive an optical signal and convert the optical signal to an electric signal;
   a clock recovery circuit to recover a clock from an output of the optical signal receiving part; and
   a polarization scrambler provided before the optical signal receiving part and configured to receive, from an optical transmission path, a signal light whose polarization state is changed in a first direction at a first polarization scrambling frequency synchronized with a transmission signal frequency, and change the polarization state of the signal light in a second direction opposite to the first direction at a second polarization scrambling frequency synchronized with the received signal light.

6. The optical receiver according to claim 5, further comprising:

   a synchronization analyzer to detect a polarization component of a certain direction from an output of the polarization scrambler in synchronization with the second polarization scrambling frequency; and
a phase shifter to adjust a phase of the second polarization scrambling frequency in a direction to minimize the polarization component detected by the synchronization analyzer,
wherein a driving signal of the phase-adjusted second polarization scrambling frequency is input to the polarization scrambler.

7. The optical receiver according to claim 5, further comprising:

a synchronization analyzer to detect a polarization component of a certain direction from an output of the polarization scrambler in synchronization with the second polarization scrambling frequency; and
a polarization-plane adjustor to adjust a direction of a polarization plane of the signal light received from the optical transmission path in a direction to minimize the polarization component detected by the synchronization analyzer,
wherein the signal light in which the direction of polarization plane has been adjusted is input to the polarization scrambler.

8. An optical transmission method comprising:

at an optical transmitter, performing polarization scrambling modulation in a first direction on an optical signal at a first polarization scrambling frequency synchronized with a transmission signal frequency; and
at an optical receiver, performing polarization scrambling modulation on the optical signal received from an optical transmission path in a second direction opposite to the first direction at a second polarization scrambling frequency synchronized with a frequency of the received optical signal.

9. The optical transmission method according to claim 8, further comprising:

at the optical receiver, detecting a phase difference between the first polarization scrambling frequency and the second polarization scrambling frequency; and
at the optical receiver, adjusting the phase of the second polarization scrambling frequency.

10. The optical transmission method according to claim 8, further comprising:

at the optical receiver, detecting an offset between polarization planes of the first polarization scrambling frequency and the second polarization scrambling frequency; and
at the optical receiver, adjusting a direction of a polarization plane of the optical signal received from the optical transmission path.

# FIG.1

1

EP 2 731 279 A1

# FIG.2

OPTICAL SIGNAL TRANSMISSION PART — 10

2

11 LD → 12 PBS → 23a QPSK_X → 14 PBC

23b QPSK_Y

INPUT DATA → 15 MODULATION SIGNAL GENERATOR (Frequency Fs)

PBC → 20a LN POLARIZATION SCRAMBLER → TO TRANSMISSION PATH

21 SYNCHRONIZATION DRIVER

Polarization Scrambling Frequency (Fo)

Fo=Fs/N
(Divide-by-N Frequency Divider),
N=1,2,3···

# FIG.3

# FIG.4

3A

EP 2 731 279 A1

# FIG.5

3B

# FIG.6

# FIG.7

# FIG.8

SENDING SITE

RECEIVING SITE

RESIDUAL AFTER CANCELLATION

# FIG.9

3D

FARADAY ROTATOR 72

MAGNETIC FIELD 71

CONTROLLER 75

PHASE SHIFTER 65

LN POLARIZATION SCRAMBLER 30a

CPL 61

ANALYZER 62

OPTICAL SIGNAL RECEIVING PART 40

DSP 50

PLL CLOCK RECOVERY 51
Received Signal (Fs)

SYNCHRONIZED DETECTION 64

SYNCHRONIZATION DRIVER 31
Polarization Scrambling Frequency (Fo)

PD 63

Received signal (Fs)

EP 2 731 279 A1

Europäisches
Patentamt

European
Patent Office

Office européen
des brevets

**EUROPEAN SEARCH REPORT**

Application Number

EP 13 18 8259

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 501 067 A1 (FUJITSU LTD [JP]) 19 September 2012 (2012-09-19) | 1,2,4-6, 8,9 | INV. H04B10/2569 |
| A | * page 5, paragraph 27 - page 7, paragraph 47; figures 1-4 * <br> * page 9, paragraph 64 - page 10, paragraph 74 * | 3,7,10 | |
| | ----- | | |
| X | US 2009/162059 A1 (NAKAMOTO HIROSHI [JP]) 25 June 2009 (2009-06-25) * page 5, paragraph 72 - paragraph 75; figure 8 * | 1,4,5,8 | |
| | ----- | | |
| X | EP 2 355 389 A2 (HITACHI LTD [JP]) 10 August 2011 (2011-08-10) * page 8, paragraph 38 - paragraph 42; figure 1 * | 1,4,5,8 | |
| | ----- | | |
| | | | TECHNICAL FIELDS SEARCHED (IPC) |
| | | | H04B |

The present search report has been drawn up for all claims

| Place of search | Date of completion of the search | Examiner |
|---|---|---|
| Munich | 20 February 2014 | Koch, Bernhard |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 13 18 8259

This annex lists the patent family members relating to the patent documents cited in the above-mentioned European search report.
The members are as contained in the European Patent Office EDP file on
The European Patent Office is in no way liable for these particulars which are merely given for the purpose of information.

20-02-2014

| Patent document cited in search report | Publication date | Patent family member(s) | Publication date |
|---|---|---|---|
| EP 2501067 A1 | 19-09-2012 | EP 2501067 A1<br>JP 2012195944 A<br>US 2012237206 A1 | 19-09-2012<br>11-10-2012<br>20-09-2012 |
| US 2009162059 A1 | 25-06-2009 | JP 5018453 B2<br>JP 2009152728 A<br>US 2009162059 A1 | 05-09-2012<br>09-07-2009<br>25-06-2009 |
| EP 2355389 A2 | 10-08-2011 | CN 102142904 A<br>EP 2355389 A2<br>JP 5350284 B2<br>JP 2011155579 A<br>US 2011182589 A1 | 03-08-2011<br>10-08-2011<br>27-11-2013<br>11-08-2011<br>28-07-2011 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011234325 A